# EUROPEAN PATENT SPECIFICATION

(11) **EP 2 776 301 B1**
(45) Date of publication and mention of the grant of the patent: **05.05.2021**
(21) Application number: 12847517.5
(22) Date of filing: 07.11.2012
(51) Int. Cl.: B62B 7/06, B62B 7/14, B62B 9/12

(54) **BABY STROLLER**
KINDERWAGEN
POUSSETTE DE BÉBÉ

(30) Priority: 07.11.2011 US 201113290189; 12.03.2012 US 201213418101
(43) Date of publication of application: 17.09.2014
(73) Proprietor: BabyJogger, LLC, Richmond VA 23227 (US); Zehfuss, Mark, Glen Allen, VA 23059 (US)
(72) Inventor: ZEHFUSS, Mark, Glen Allen, VA 23059 (US)
(74) Representative: Cabinet Beau de Loménie
(86) International application number: PCT/US2012/063971
(87) International publication number: WO 2013/070787

(56) References cited:
- EP-A2- 1 900 599
- EP-A2- 2 096 016
- WO-A1-2010/110831
- WO-A2-2009/077788
- DE-A1- 10 011 588
- DE-U1-202006 017 557
- US-A1- 2008 061 533
- US-A1- 2008 061 533
- US-A1- 2008 296 872
- US-A1- 2011 084 467
- US-B1- 6 299 194
- US-B1- 6 322 098
- US-B1- 7 401 803
- US-B2- 7 396 039

## Description

### RELATED APPLICATION

This patent application claims priority under 35 U.S.C. §120 to United States Patent Application Serial No. 13/290,189 filed on November 7, 2011.

### BACKGROUND OF THE INVENTION

### Field of the Invention

The present invention relates to a baby stroller comprising a stroller frame and a baby seat (hereinafter, "seat" or "chair") and more particularly to a baby stroller that can be folded without removing the chair from the stroller frame to provide a simple, easy and quick operation. The chair may also be folded while on a stroller frame directly to reduce the storage volume of the baby stroller. In further embodiments, the baby stroller comprises a stroller frame and a chair, wherein the chair may be mounted on the stroller frame in either a forward facing position or a rearward facing position. Further, the chair may be rotatably connected to the stroller frame such that the chair may rotate relative to the stroller frame while the stroller frame is in a folded storage position. In further embodiments, the stroller frame may be folded with the chair connected in either the forward facing position or the rearward facing position.

The present invention also includes a chair capable of being connected to a stroller frame, wherein the chair comprises a folding joint. In a particular embodiment, the chair in a folded position is substantially half the length of the chair in the unfolded position.

### Description of the Related Art

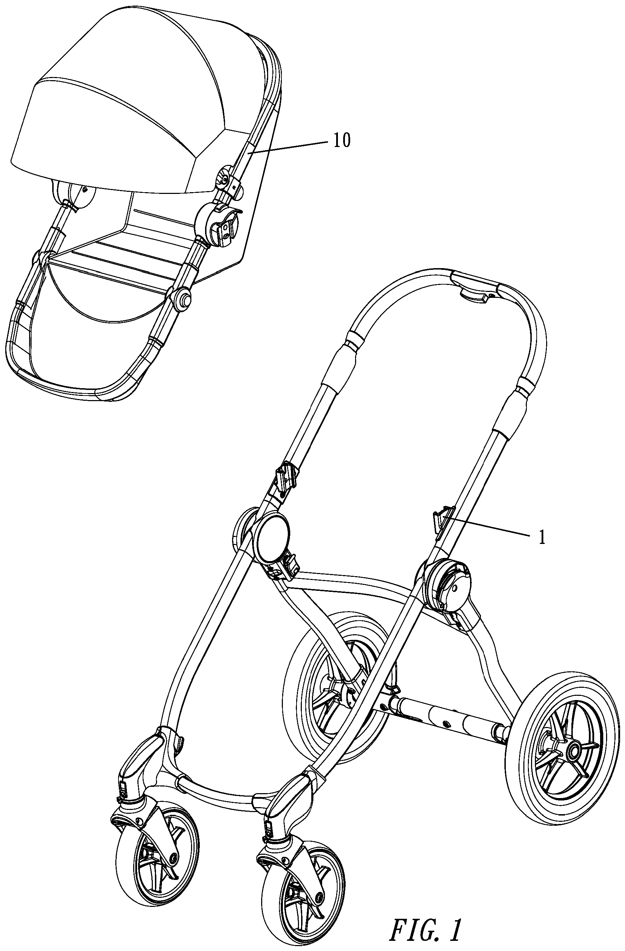

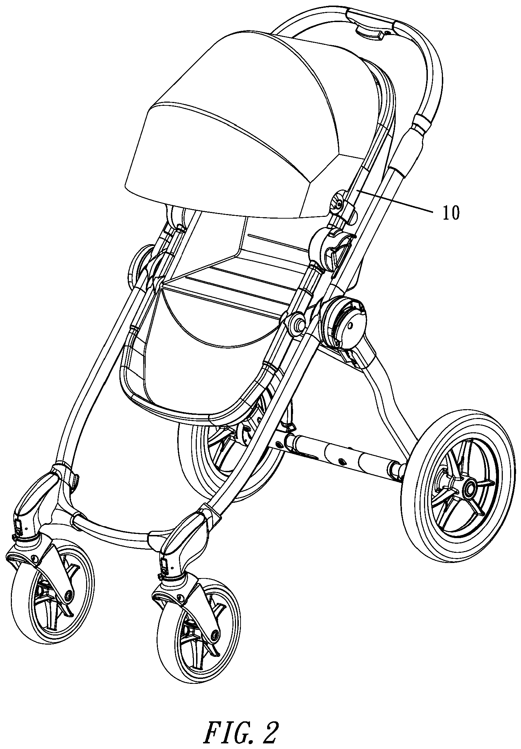

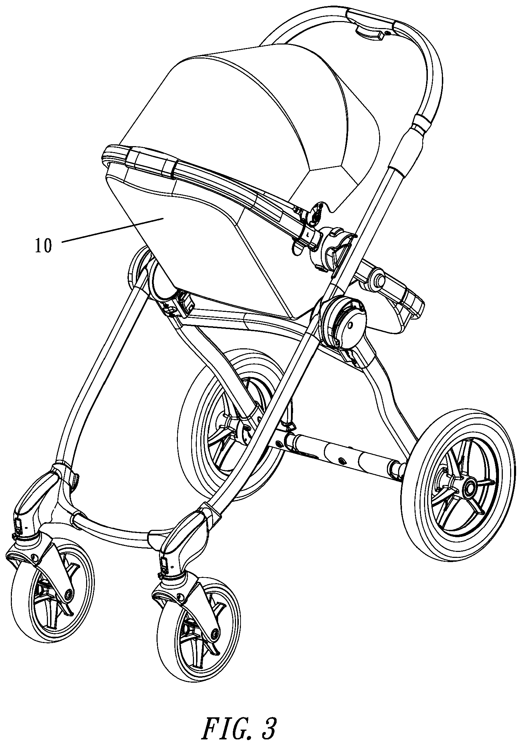

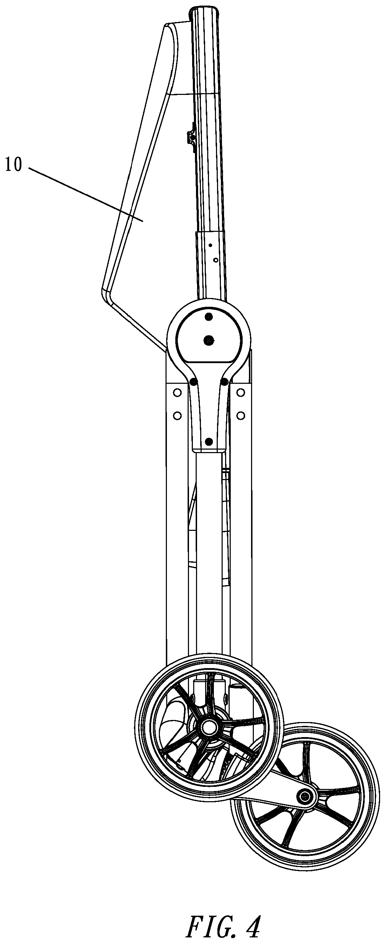

With reference to FIGS. 1 to 3 for a conventional baby stroller, the baby stroller comprises a stroller frame having an independent seat base I and a baby seat 10 capable of being sheathed and mounted on the seat base in either a forward facing or rearward facing direction of the seat 10 simply and quickly. However, the seat 10 protrudes from the stroller frame, so that when the baby stroller is folded, the size (which refers to the volume of the stroller in the folded position) may still take up more storage space (or be higher than desired as the seat may not be folded with the stroller frame) as shown in FIG. 4, and a larger size or volume may result in inconvenience during transportation or carrying of the baby stroller. If the seat 10 is facing rearward (as shown in FIG. 3), the seat 10 will interfere with the stroller frame during the folding process and thus the baby stroller cannot be folded completely. On such strollers, it is necessary to remove the seat 10 before folding the baby stroller. Obviously, if not careful during the seat removal and storage process, parts may be lost and the transportation and carrying of the baby stroller may be inconvenient.

There is a need for a stroller that comprises a seat capable of rotating while connected to a stroller frame in a folded position such that the stroller may be folded while the stroller is in the forward facing position or the rearward facing position. There is a further need for a stroller seat that may be folded while still connected to the stroller to provide a more compact folded stroller that is more easily stored or carried Another stroller is known by DE202006017557U1.

### Summary of the Invention

Many conventional baby strollers comprise a frame with folding mechanisms on each side that allow the baby stroller to be converted from an unfolded in-use position to a folded position that has a reduced volume for ease of storage or transportation. Further, such conventional strollers are available in two different configurations, strollers that comprise seats that are permanently attached to the stroller frame and strollers that have seats that are removably connected to the frame allowing the seat to be connected in either a forward facing position or a rearward facing position. In a forward facing position, the child is seat in the stroller seat facing the direction that the stroller is advancing while in the rearward facing position the child is seated in the stroller seat facing the parent, guardian or other person who is pushing the stroller. Many children, especially young children, like to face their parents as they walk. However, conventional strollers with reversible seats may only be folded when the seat is in the traditional forward facing position. The frame of the seat in the rearward facing position may interfere with the stroller frame during the folding process or the stroller seat remains in an awkward position after folding, thus preventing the stroller frame from folding completely when the stroller seat is in the rearward facing position. If the seat is in the rearward facing position, the seat must be removed or reversed to the forward facing position prior to folding the baby stroller.

The baby stroller according to claim 1 and embodiments of the baby stroller described herein comprise a stroller frame and a removably connected stroller seat or chair, wherein the stroller may be folded with the stroller seat facing in a forward facing position or with the stroller seat in the rearward facing position. The stroller frame comprises at least one frame latch and the chair comprises at least one seat latch that is capable of connecting with the frame latch to attach the chair in either the forward facing position or in the rearward facing position. In some embodiments, the stroller frame will comprise two frame latches and the stroller seat will comprise two seat latches. In some embodiments, either the stroller frame latch or the seat latch is rotatably connected such that the seat is capable or rotating relative to the stroller frame when the stroller frame is in a folded position and is not capable of rotating relative to the stroller frame when the stroller frame is in the unfolded position. In some embodiments, the stroller frame latch and/or the seat latch may rotate in a plane that is substantially parallel or a plane parallel to the plane of rotation of a portion of the stroller frame in the folding or unfolding process.

In such embodiments, the chair may rotate as the stroller frame is folded to prevent interference between frame members and allow a more compact folded position of the stroller. Typically, a stroller frame comprises at least one upper tube (or handle frame) 21, at least one lower tube (or front wheel frame) 22, and at least one rear wheel frame 23. Either the chair or the stroller frame may comprise a rotatable base comprising a latch. Embodiments of the invention include a stroller frame comprising a rotatable base comprising a latch capable of connecting a chair to the stroller frame. In such embodiments, the rotatable base comprises at least one stop that prevents the rotatable base from rotating relative to the stroller frame when the stroller is in the unfolded in-use configuration. This fixes the chair or seat to support the child in an upright position for use. The stops on the rotatable base may engage any portion of the stroller frame to prevent rotation of the chair, for example. The stops, however, do not prevent the chair from rotating relative to the stroller frame when the stroller frame is in the folded storage position. In embodiments, the rotatable base is capable of rotating when the stroller frame is in the folded configuration.

Further embodiments of the invention include a stroller chair comprising a rotatable base comprising a latch capable of connecting a chair to a stroller frame. In such embodiments, the stroller frame latch may be in a fixed position relative to the stroller frame. In further embodiments, the rotatable base comprises at least one stop that prevents the rotatable base from rotating relative to the stroller frame when the stroller is in the unfolded in-use configuration. The stops, however, do not prevent the chair from rotating relative to the stroller frame when the stroller frame is not in the unfolded in-use configuration. In embodiments, the rotatable base is capable of rotating when the stroller frame is in the folded configuration and/or during the folding process.

As used herein, "substantially" means that the property is within 20% of stated property, for example, if the two components are substantially parallel, the two components are within 18° of being parallel (20% of 90°); in more specific embodiments, the property is within 10% of the stated property.

Therefore, it is a primary objective of the present invention to provide a baby stroller that can be folded while connected to a chair to provide a simple, easy and quick operation.

Another objective of the present invention is to provide a chair that can be folded while connected to a stroller frame to reduce the storage volume of the baby stroller.

The present invention provides a baby stroller comprising an independent stroller frame and a chair, wherein the stroller frame comprises a rotatable base, such that when the baby stroller is unfolded, the rotatable base abuts and positions the chair with the stroller frame automatically, and when the baby stroller is folded, the chair is rotated together with the base, such that the chair can be folded and positioned together with the stroller frame directly.

In addition, the chair of the present invention includes a folding joint, so that the chair can be folded while connected to the stroller frame to provide a simple, easy and quick operation and achieve the effect of reducing the storage volume of the baby stroller.

### BRIEF DESCRIPTION OF THE DRAWINGS

FIG 1 is a perspective view of a chair and a stroller frame of a conventional baby stroller that are not connected;
FIG 2 is a front perspective view of a conventional baby stroller comprising a chair connected to a stroller frame;
FIG. 3 is a rear perspective view of the conventional baby stroller of FIG. 2;
FIG. 4 is a side view of conventional baby stroller in the folded storage position;
FIG 5 is a perspective view of a chair and a stroller frame of the present invention that are not connected;
FIG. 6 is an exploded view of an embodiment of a rotatable base comprising a positioning element of the present invention;
FIG 7 is a side view of a baby stroller of the present invention in the unfolded in-use position with the chair in a forward facing position;
FIG. 8 is another side view of a baby stroller of the present invention in the unfolded in-use position with the chair in a rearward facing position;
FIG. 9 is a side view of a stroller frame of the present invention in the unfolded in-use position;
FIG. 10 is a side view of a baby stroller of the present invention in the folded position with chair in a forward facing position and the chair has rotated with the rotatable base from an unfolded position to a folded position;
FIG. 11 is another side view of a baby stroller of the present invention in the folded position with chair in a rearward facing position and the chair has rotated with the rotatable base from an unfolded position to a folded position;
FIG 12 is a side view of a stroller frame of a baby stroller of the present invention in the folded position:
FIG. 13 is an exploded view of a folding joint and a rotatable base comprising a positioning element in accordance with another embodiment of the present invention;
FIG. 14 is a schematic view of a folding joint and rotatable base comprising a positioning element of a baby stroller in the unfolded in-use in accordance with another preferred embodiment of the present invention, wherein the rotatable base held in a fixed position by the positioning element in contact with the stroller frame;
FIG 15 is a schematic view of a folding joint and rotatable base comprising a positioning element of a baby stroller in folded storage position in accordance with another preferred embodiment of the present invention, wherein the rotatable base is capable of rotating in either the clockwise or counter clockwise direction;
FIG. 16 is a perspective view of a chair of the present invention comprising a chair folding joint and a footrest folding joint;
FIG. 17 is an exploded view of a chair folding joint of the present invention;
FIG. 18 is a schematic view of a portion of a chair folding joint in a locked state in accordance with the present invention;
FIG 19 is another schematic view of a portion of a chair folding joint in a locked state in accordance with the present invention;
FIG. 20 is a schematic view of a portion of a chair folding joint in an unlocked state in accordance with the present invention;
FIG 21 is another schematic view of a portion of a chair folding joint in an unlocked state in accordance with the present invention;
FIG. 22 is a side view of a baby stroller in the folded position with a chair attached in the forward facing position, wherein the chair is also in the folded position;
FIG 23 is an exploded view of a stroller chair frame comprising a chair folding joint in accordance with another embodiment of the present invention;
FIG. 24 is a schematic view of a stroller chair frame comprising a chair folding joint in a locked state in accordance with another embodiment of the present invention;
FIG 25 is a schematic view of a chair folding joint in a locked state in accordance with another embodiment of the present invention;
FIG. 26 is a schematic view of a chair folding joint in an unlocked state in accordance with another embodiment of the present invention; and
FIG. 27 is another schematic view of a chair folding joint in an unlocked state in accordance with another embodiment of the present invention.

### DETAILED DESCRIPTION OF THE PREFERRED EMBODIMENTS

The technical characteristics, structures and effects of the present invention will become apparent with the detailed description of two preferred embodiments together with the illustration of related drawings as follows.

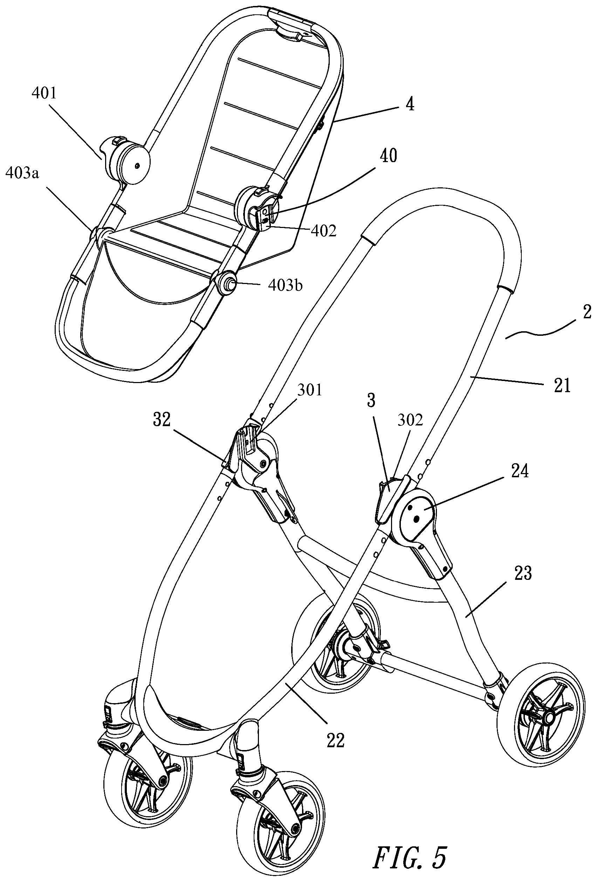

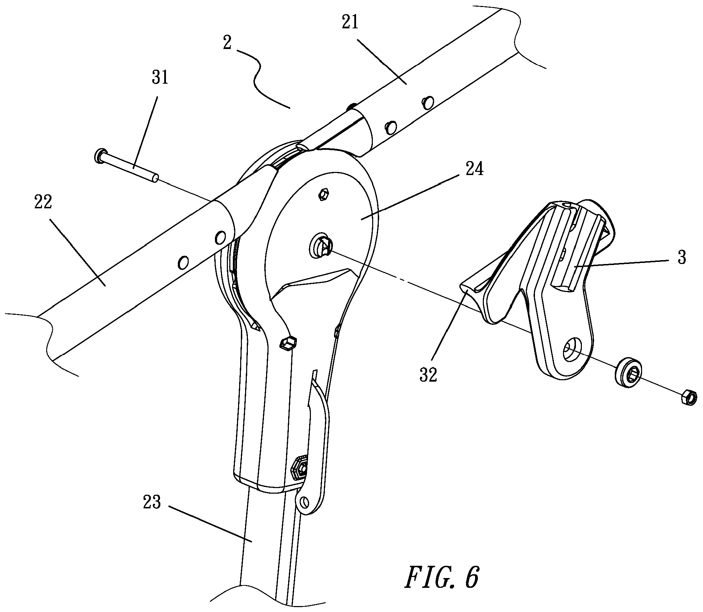

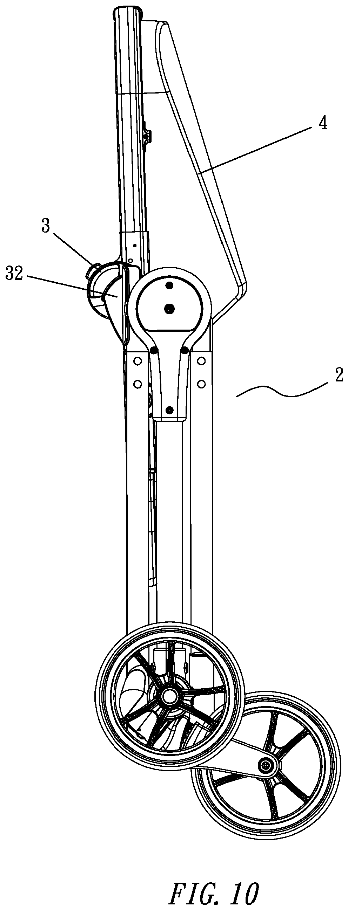

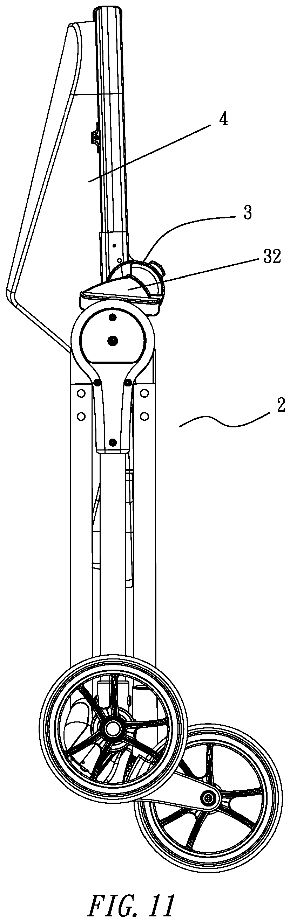

With reference to FIGS. 5 to 8, an embodiment of the baby stroller of the present invention comprises a stroller frame 2 having at least one upper tube 21, at least one lower tube 22, a rear wheel frame 23 and at least one folding joint 24. In the embodiment shown, the folding joint 24 rotatably connects the upper tube 21, the lower tube 22 and the rear wheel frame 23. By rotating the upper tube, lower tube and rear wheel frame relative to each other the stroller frame may be converted from an unfolded in-use position (shown in FIG. 5, for example) and a folded storage position (shown in FIG. 10 with the chair in the forward facing position and FIG 11 with the chair in the rearward facing position, for example). Embodiments of the stroller comprise a system capable of allowing the seat to rotate relative to the stroller frame in the unfolded storage position. In embodiments, the chair is capable of rotating in the same direction as the tubes of the stroller frame.

For example, the embodiment of the baby stroller shown in FIG. 5 through FIG 13, for example, comprises a stroller frame comprising a rotatable base 3 rotatably connected to the stroller frame 2 (or the folding joint 24). The rotatable base 3 is capable of rotating relative to the stroller frame in the unfolded storage position and is not capable of rotating relative to the stroller frame in the unfolded in-use position. Thus, a chair connected to the rotatable base is in a fixed position on the stroller in an unfolded in-use position and is rotatable relative to the stroller in a folded storage position.

As shown, the rotatable base 3 is rotatably connected to the folding joint 24 by a fixing element 31 (such as a bolt, rivet, axle, pin or other connector capable of rotatably connect the rotatable base to the stroller frame or folding joint). The rotatable base 3 comprises a positioning element 32. The positioning element may be any component that is capable of preventing the rotatable base 3 from rotating when the stroller frame is in the unfolded in-use position. For example, as shown in the figures, the positioning element 32 may be installed on an external side at an upper end of the base 3 and in embodiments wherein the positioning element engages at least one tube of the stroller frame, the positioning element 32 may be a semicircular arc shaped stop block . It should be noted, however, that the positioning element may be any other shape or mechanism that allows the rotatable base 3 to rotate relative to the stroller frame in folded storage position and/or during the folding process but holds the rotatable base relatively fixed in the unfolded in-use position. For example, the same mechanism that unlocks the stroller frame may be used to unlock the rotatable base. Further, the positioning element may be formed as a unitary part of the rotatable base (as shown) or may be connected or attached as a separate component. In other embodiments, the positioning element may operate mechanically in conjunction with a locking element on the folding joint, for example.

Further embodiments of the baby stroller may comprise a rotatable component on the chair or chair frame instead of on the stroller or stroller frame. The rotatable component on the chair would function similarly to the rotatable base shown on the stroller frame or folding joint as shown in the drawings, such that the chair is held in a fixed position on the stroller frame with the stroller frame in an unfolded in-use position and is capable of rotating when the stroller frame is in a folded storage position or during the folding process. The chair mounted rotatable base may also comprise a positioning element 32 that is capable of engaging the stroller frame.

The mechanism may be any mechanism or the positioning element may be any component that may hold the rotatable base fixed in the unfolded in-use position and allow the rotatable base to rotate in the folded storage position. For example, the rotatable base may be on a frame or folding joint of an independent chair 4, having a seat latch 40 capable of being latched onto a stroller frame.

In the embodiment shown in FIG. 5 through FIG. 11, the stroller frame comprises a left frame latch 301 and a right frame latch 302 and chair 4 comprises left seat latch 401 and right seat latch 402. In this embodiment, chair 4 may be connected to the stroller frame 2 in a forward facing position, wherein the left side seat latch 401 is connected to the left frame latch 301 and the right seat latch 302 is connected to the right frame latch 402. The chair 4 may also be connected to the stroller frame 2 in a rearward facing position, wherein the left side seat latch 401 is connected to the right frame latch 302 and the right seat latch 402 is connected to the left frame latch 302. Thus, the seat may easily be installed in a forward facing position or a rearward facing position.

The chair 4 may also comprise an adjustable foot rest. For example, in the embodiment shown in FIG 5, the chair comprises at least one foot rest folding joint, such as foot rest joints 403a and 403b. The foot rest folding joints 403a and 403b allow the foot rest portion 43b of the lower tube 43 to be pivoted relative to the extension tubes 43a. The foot rest portion 43b may be raised or lowered by pivoting them relative to the extension tubes 43a at the foot rest folding joints 403a and 403b.

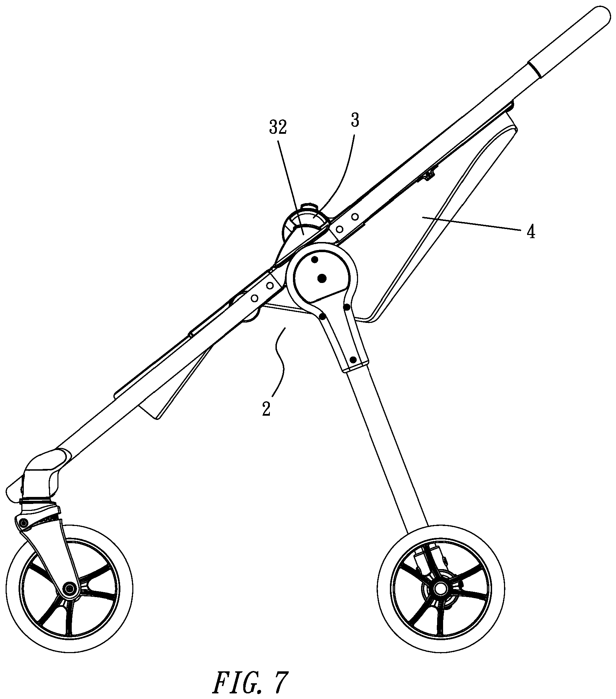

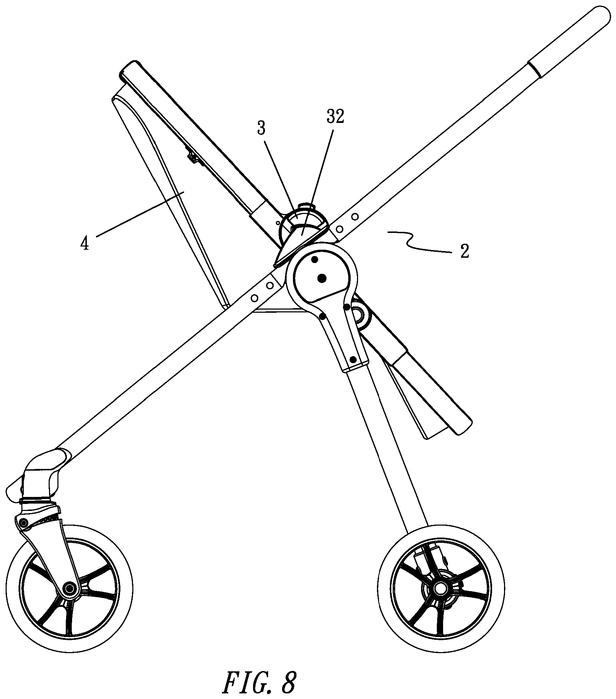

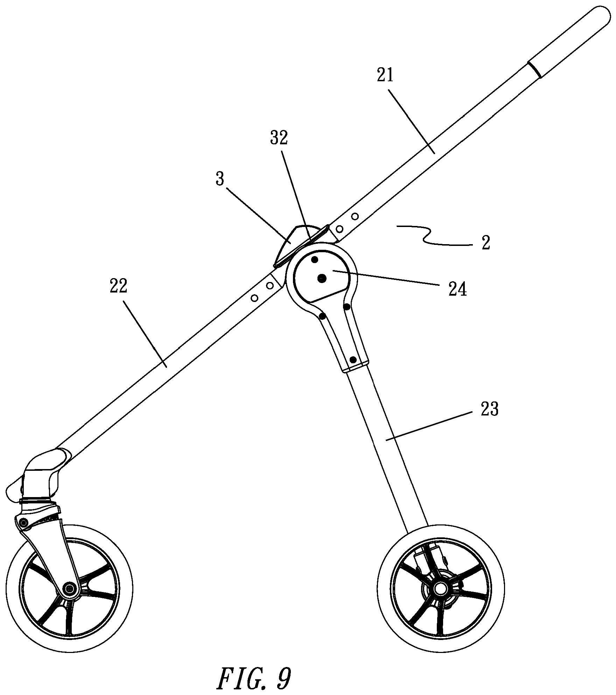

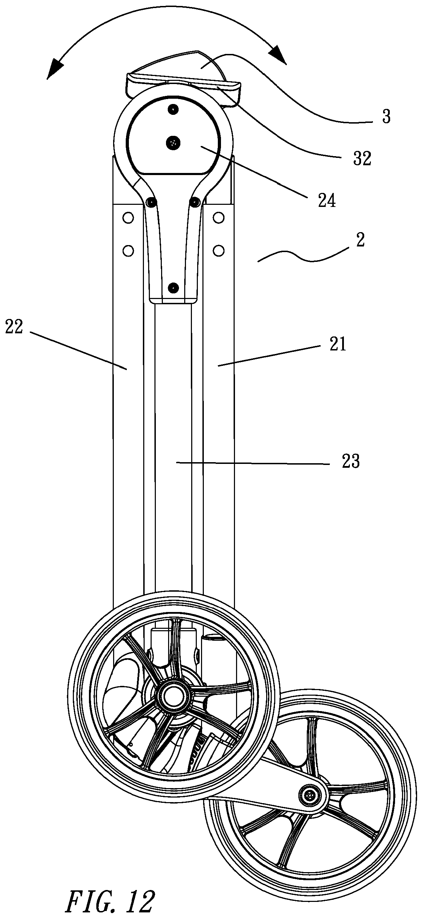

In the embodiment shown, when the baby stroller is unfolded, the positioning element 32 of the rotatable base 3 abuts and fixes the chair 4 relative to the stroller frame 2 as shown in FIGS. 7 to 9. In the embodiment shown in FIGs. 8 and 9, the chair 4 may be attached in a forward facing position (FIG. 8), as shown in a rearward facing position (FIG. 9), or removed from the stroller frame (FIG. 9). On the other hand, if a user wants to fold the baby stroller, the user simply unlocks the stroller frame folding joint and turns the stroller frame 2 downwardly and inwardly to fold the stroller frame. The chair is free to rotate with the rotatable base 3 as the positioning element 32 does not abut the stroller frame and fix the chair 4 relative to the stroller frame. The chair 4 may rotate in either the clockwise or counter clockwise direction until a portion (such as stop) of the positioning element, rotatable base or the chair contacts a portion of the stroller frame. Thus, the stroller frame may be moved to the folded position without removing the chair 4 in either the forward facing position as shown in FIG. 10 and/or the rearward facing position as shown in FIG 11. Of course, the user can selectively remove the chair 4 and then fold the stroller frame 2 as shown in FIGS. 9 and 12.

In short, the baby stroller comprises a rotatable base 3 on the Stroller frame 2 or on the chair 4, so that when the baby stroller is unfolded, the rotatable base abuts a portion of the stroller frame 2 to position the chair in an in-use position; and when the baby stroller is folded, the rotatable base positions the chair 4 together with the stroller frame 2 in a folded position without interference of the stroller frame in either a forward or a rearward facing position.

From the description above, the present invention has one or more of the following advantages and effects, and obviously improves over the prior art.
1. The direction of the chair 4 can be changed simply and quickly.
2. The chair 4 can be folded while connected to the stroller frame, not only overcoming the problem of the conventional baby stroller that cannot be folded without removing the seat, but also simplifying the procedure of folding the baby stroller and providing a simple, easy and quick operation.
3. The chair 4 can be folded while connected to the stroller frame directly to avoid the step of separating the chair 4 and the stroller frame 2 or prevent missing components.

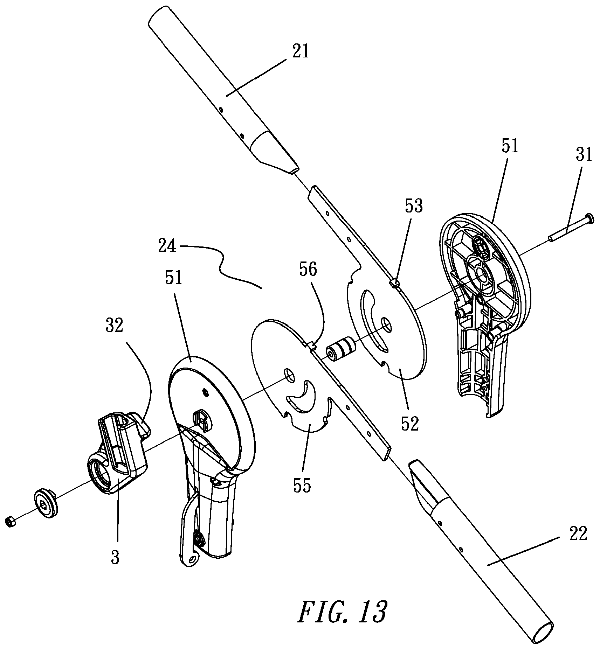

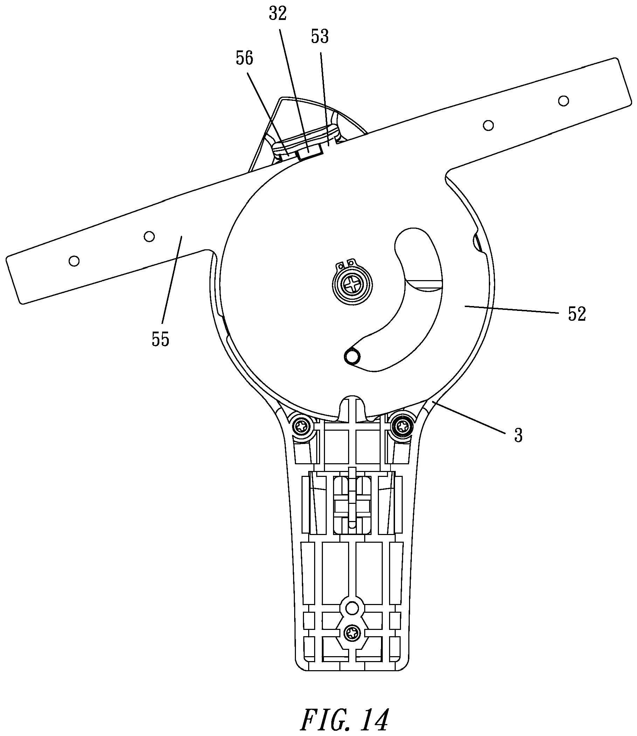

With reference to FIGS. 13 to 15, an embodiment of the folding joint 24 of the present invention is shown comprising two joint covers 51, secured together by a fixing element 31. The folding joint 24 also comprises a rotatable base rotatably connected to a joint cover 51 by the fixing element 31. The folding joint is coupled to upper tube, lower tube, and the rear wheel frame by the link plates and joint covers. For example, the folding joint 24 comprises an upper link plate 52 installed within the joint cover 51 and coupled to the upper tube 21. The upper link plate 52 comprises a bump 53 which acts as stop for the rotatable base in the folded and unfolded positions. In the unfolded in-use position, the bump 53 engages a portion of the positioning element to prevent the rotatable base from rotating in the clockwise direction as shown in the view of FIG. 14. The positioning element may also limit rotation of the rotatable base in the unfolded position.

The folding joint 24 may also comprise a lower link plate 55 installed within the joint cover 51 and coupled to the lower tube 22. The lower link plate 55 comprises a stop body 56 which also acts as stop for the rotatable base. The stop body 56 rotates with the lower link plate 55 as the stroller is folded or unfolded. In the unfolded in-use position, the stop body 56 engages a portion of the positioning element 32 to prevent the rotatable base 3 from rotating in the counterclockwise direction as shown in the view of FIG. 14.

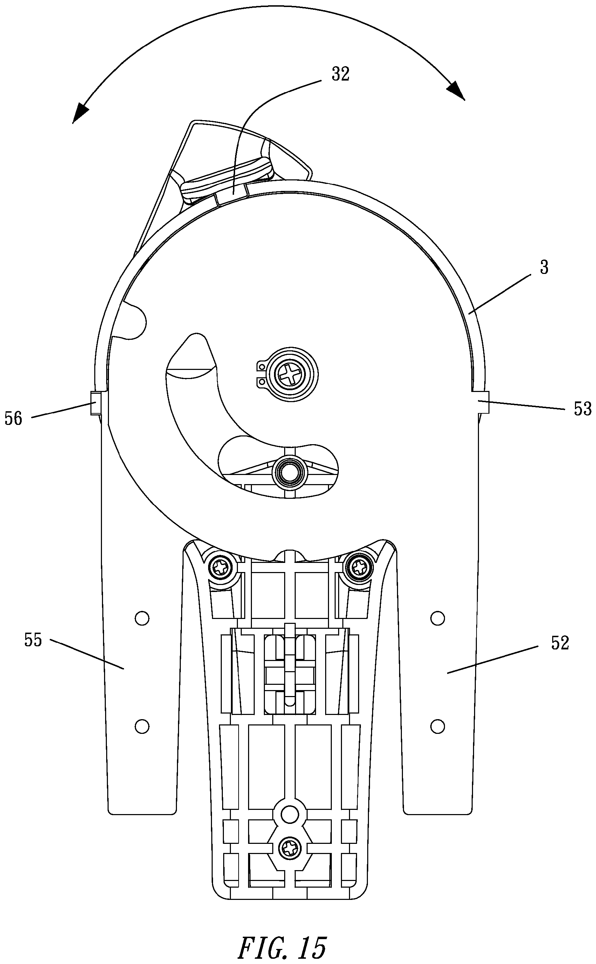

When the baby stroller is unfolded, a portion of the positioning element 32 of the base 3 is sandwiched between the bump 53 and the stop body 56 of the upper and lower link plates 52, 55. When the stroller frame 2 (which includes the upper and lower tubes 21, 22) is unfolded, the stroller frame 2 and rotatable base 3 are positioned automatically relative to each other as shown in FIG. 14. On the other hand, if the user wants to fold the baby stroller, the user simply turns the stroller frame 2 downwardly and inwardly, so that the upper and lower link plates 52, 55 are rotated to the folded position as shown in FIG. 15. With the bump 53 and the stop body 56 in the lower or retracted folded position, the rotatable base 3 is no longer closely sandwiched between bump 53 and stop body 56 and may rotate in the increased space between them. The rotatable base 3 may rotate in the counter clockwise direction until it engages stop body 56 and in the clockwise direction until it engages bump 53. With the chair installed on the rotatable base 3, the frame of the chair may rotate to be aligned with the tubes of the stroller frame.

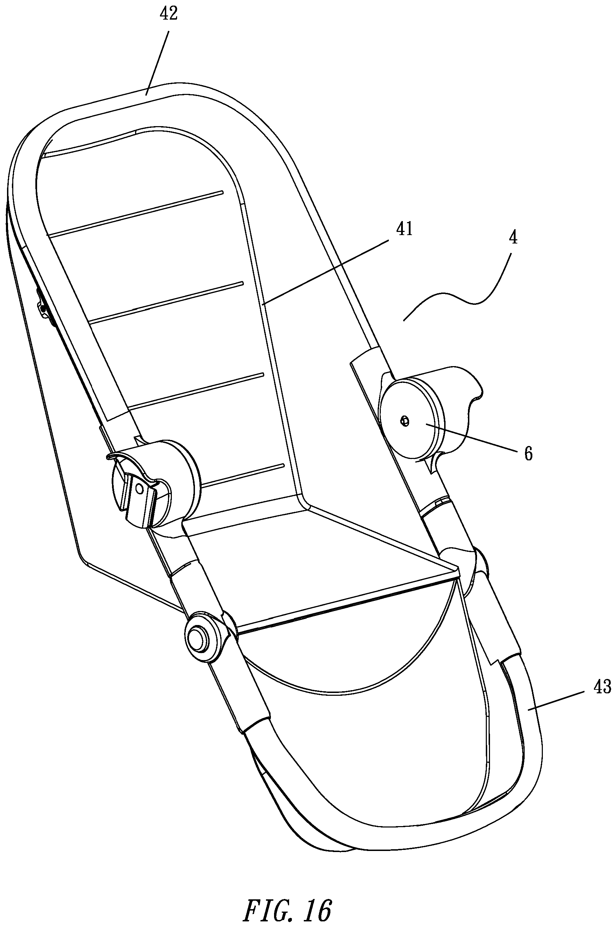

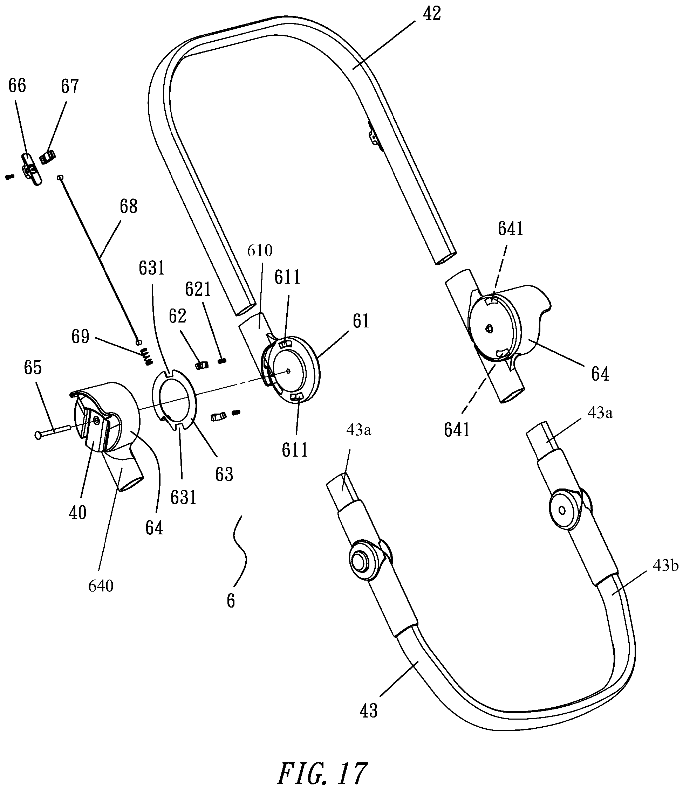

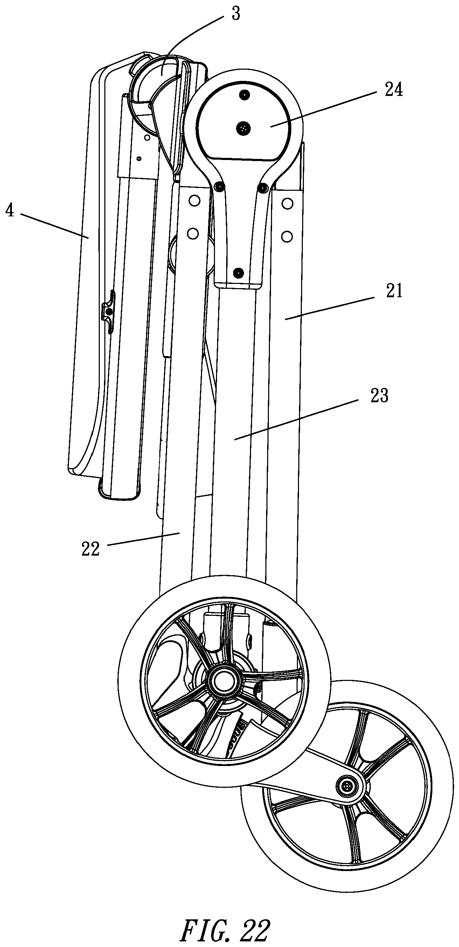

To further reduce the storage volume of the folded baby stroller, embodiments of the chair 4 comprises a folding joint 6 installed onto the chair 4 as shown in FIGS. 16 and 17. In some embodiments, the seat folding joint 40 may be substantially in a central portion of the seat 4. For example, the upper tube 42 and the lower tube 43 may be of substantially the same length from the joint to farthest end of the tube, such as shown in FIG. 22, wherein the chair 4 is shown in the folded position while connected to the stroller frame. The chair 4 may comprise a folding joint so it is capable of being folded to further reduce the size and/or volume of the stroller in the folded position.

Embodiments of the chair comprise at least one upper tube, at least one lower tube and a folding joint. The folding joint is capable of pivoting the upper tube and lower tube relative to each other from an unfolded in-use position to a folded storage position. See FIG. 16 and FIG. 17, for example. In some embodiments when the chair in the folded position, longitudinal axes of the upper tube and the lower tube may be substantially parallel to each other. In additional embodiments, the upper tube and lower tube may be substantially collinear in the unfolded position.

The upper tube and lower tube of the chair are typically made from metal tubes such as aluminum tubes; however, the tubes may be made of any material and any shape. The term "tube" is used to describe the frame members which may be made from a tubular or other structurally sufficient material and shape. The tubes may be made of a solid or structural plastic or composite material, for example.

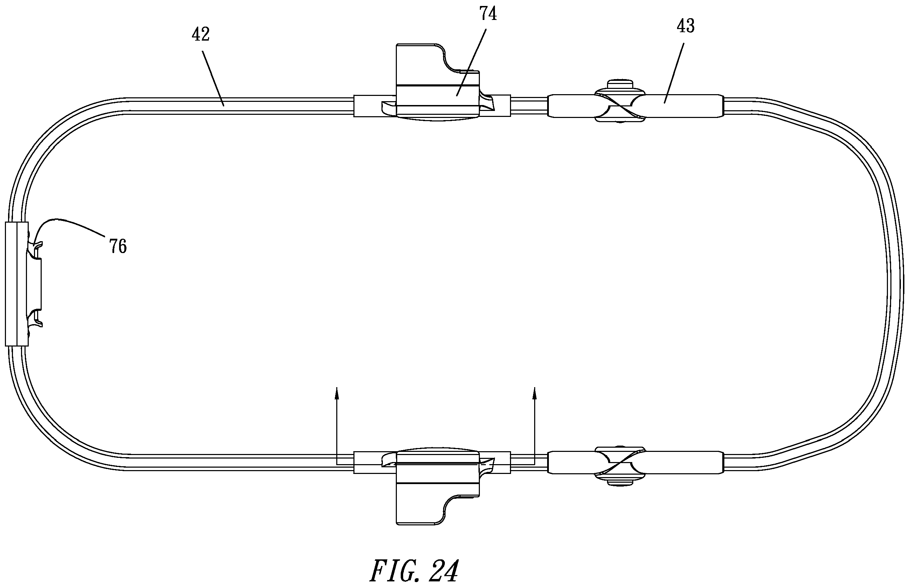

The chair may comprise a folding joint capable of pivotally connecting the upper tube and the lower tube. In certain embodiments, the chair 4 may comprise a fabric seat 41 and upper tube 42 and lower tube 43, wherein the fabric seat is mounted onto the tubes 42 and 43. The folding joint 6 is connected between the upper tube and lower tube 42, 43 of the chair 4. In the embodiment shown, the folding joint comprises an upper joint 61 fixed to the bottom of the upper tube 42 of the chair 4 and a lower joint 64 fixed at an upper end of the lower tube 43 of the chair 4. The upper joint 16 and the lower joint 64 are rotatably connected to allow upper tube 42 and the lower tube 43 to be rotated relative to each other to move the chair into either a folded configuration (as shown in FIG 22, for example) or an unfolded configuration (as shown in FIG. 24, for example). In the embodiment shown, the upper joint 61 and the lower joint 64 are configured such that a lower portion of the upper frame and an upper portion of the lower frame are substantially linear or parallel in the unfolded configuration and substantially parallel also in the folded configuration, such as in a standard butt hinge. For example, the upper joint 61 may comprise an upper arm 610 that comprises a longitudinal axis that does not pass through the center for rotation of the seat folding joint. Similarly, the lower joint 64 may comprise a lower arm 640 that comprises a longitudinal axis that does not pass through the center for rotation of the seat folding joint. The design of the folding joint is similar to a standard butt hinge. For example, a longitudinal axis of an arm of the frame is offset from a parallel lines extending through the axis of rotation of the folding joint.

Alternatively, either the upper frame 42 or the lower frame 43 may have a smaller length or width such that one frame may be folded to be within the other frame. In such embodiments, the folding joints would not necessarily comprise a longitudinal axis of an arm that is offset from a diameter parallel to the frame.

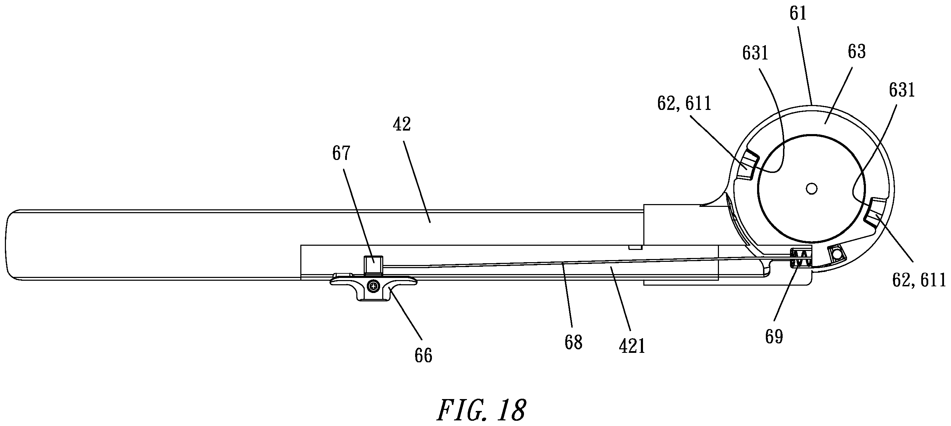

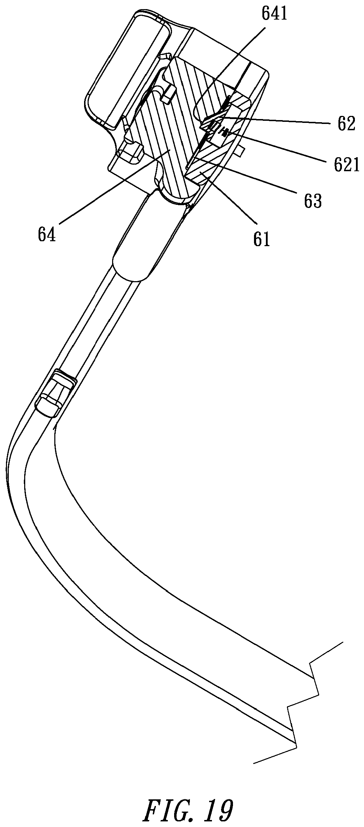

Embodiments of the seat folding joint may comprise a mechanism to lock the chair in at least an unfolded configuration, further, in additional embodiments, the seat folding joint may be able to be locked in a folded position. For example, the upper joint 61 further may comprise a notch 611 formed on an external side; two fixing members 62, installed in a notch 611 through a spring 621, so that the fixing member 62 is maintained at an upwardly disposed state; a press plate 63, installed on an external side of the upper joint 61, and having a breach 63 corresponding to the fixing member 62. The lower joint 64 may be integrated with a seat latch 40, and having a corresponding positioning slot 641 formed on an internal side of the lower joint 64 (as shown in FIG. 18) and corresponding to the two fixing members 62, and the upper and lower joints 61, 64 and a fixing element 65 (such as a rivet or other component as described) are provided for a fixing effect to position the fixing members 62 and press plate 63 therein, a press button 66, installed outside the upper tube 42 of the chair 4 and having a slide member 67 coupled to the bottom of the press button 66, and disposed in a slide slot 421 of the upper tube 42 of the chair 4 (as shown in FIG. 19); and a link element 68 (such as a steel wire), installed in the upper tube 42 of the chair 4, and having an end fixed to the press plate 63 and a spring 69 sheathed thereon, and another end fixed to the slide member 67.

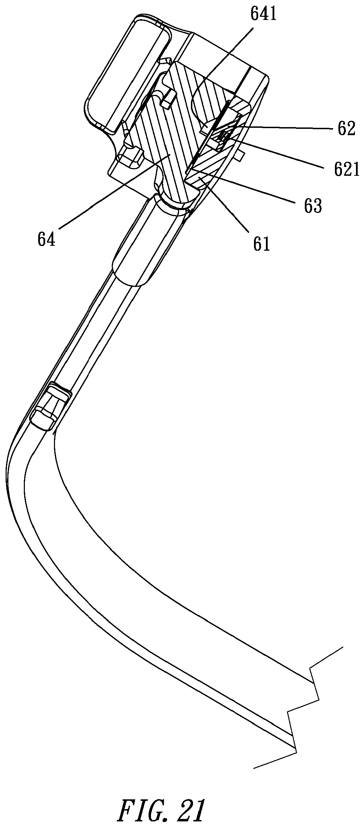

With the aforementioned structure, when the chair 4 is unfolded as shown in FIG. 16, the fixing member 62 is latched to the notch 641 of the lower joint 64 as shown in FIGS. 16, 18 and 19. If the user wants to fold the chair 4, the user simply presses the press button 66 to link and rotate the press plate 63 through the slide member 67 and the steel wire 68. While the press plate 63 is rotating, the press plate 63 pushes an oblique surface on a side of the fixing member 62 to move the fixing member 62 downward and separate it from the notch 641 of the lower joint 64. Now, the user turns the upper tube 42 of the chair 4 downward, while turning the upper joint 61 to fold the chair 4 as shown in FIGS. 20 to 22, so that the baby stroller can be folded and stored directly without removing the chair 4, so as to reduce the length (or height) of the baby stroller into half. Any other mechanism may also be used to retain the chair in the unfolded and/or folded configurations.

The chair 4 may comprise two folding joints for increased safety. For example, chair 4 may include left and right folding joints 6 that can be operated independently, so that users must operate both folding joints 6 at the same time for the operation to prevent a misuse by accident.

If the user does not apply forces to the press button 66, the fixing member 62 and the press plate 63 are rotated back to their original positions by the tension released from the spring 621. Now, the upper tube 42 of the chair 4 is lifted and unfolded, and the fixing member 62 will be latched to the notch 641 of the lower joint 64 automatically to unfold and position the chair 4 back to its original position as shown in FIG. 16.

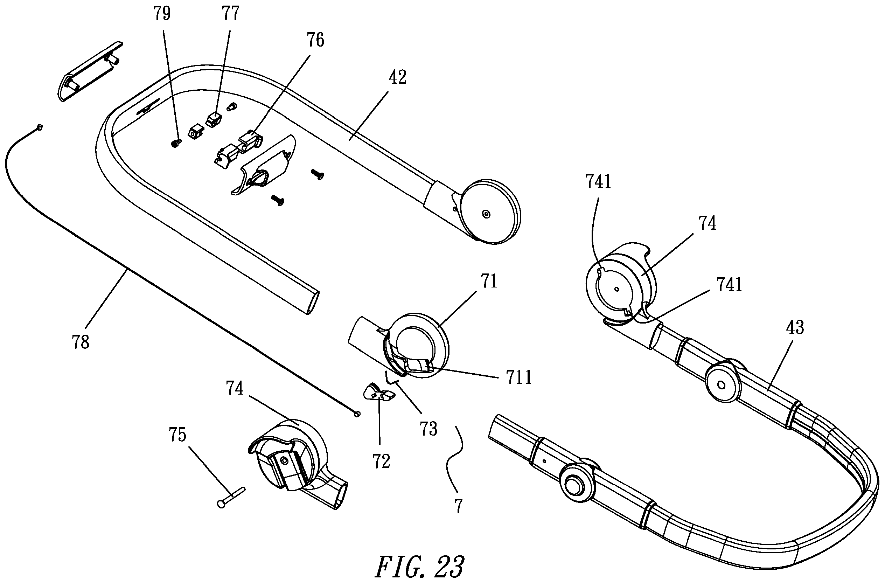

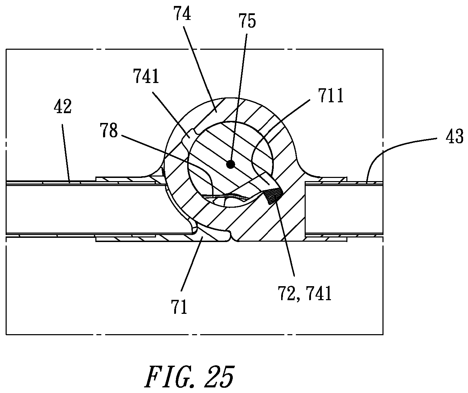

With reference to FIGS. 23 to 25 for a folding joint of another preferred embodiment of the present invention, the folding joint 7 comprises an upper joint 71, fixed to the bottom of the upper tube 42 of the chair 4, and having a notch 711 formed on an external side of the upper joint 71; a fixing member 72, installed in the notch 711 through a spring 73, such that the fixing member 72 is always maintained at an outwardly rotated state; a lower joint 74, fixed to an upper end of the lower tube 43 of the chair 4, and having two corresponding positioning slots 741 formed on an internal sides of the lower joint 74, and the upper and lower joints 71, 74 can be passed and coupled by a fixing element 75 to position the fixing member 72 therein; a press button 76, installed on an external side at the middle of an upper end of the upper tube 42 of the chair 4, and having a slide member 77 installed at the bottom of the press button 76; a link element 78 (such as a steel wire or other appropriate material), installed in the upper tube 42 of the chair 4, and having an end fixed to the fixing member 72, and another end fixed to the slide member 77; and an adjusting screw 79, screwed to the slide member 77, for adjusting the length of the link element 78.

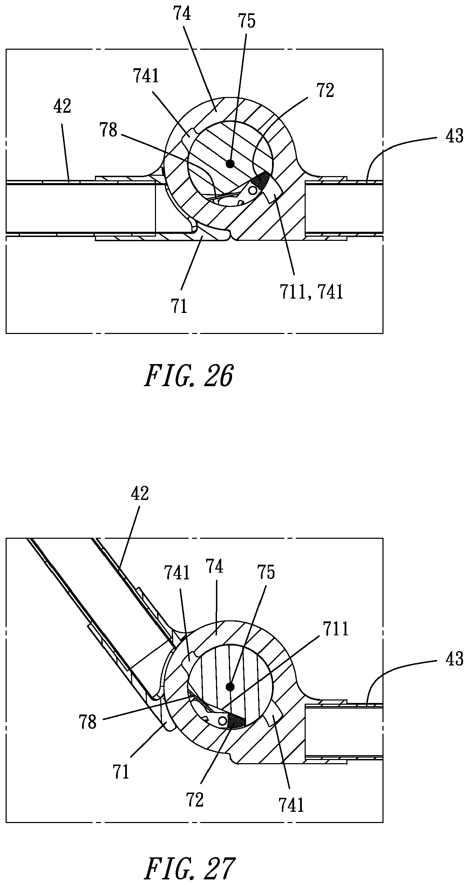

When the chair 4 is unfolded, the fixing member 72 is engaged with a positioning slot 741 of the lower joint 74. If the user wants to fold the baby stroller, the user simply presses the press button 76, such that the slide slot 77 and the link element 78 pull the fixing member 72 to rotate, and the fixing member 72 moves inwardly to detach its connection with the positioning slot 741 of the lower joint 74, and then the upper tube 42 of the chair 4 is turned to fold the chair 4 as shown in FIGS. 22,26 and 27, so as to reduce the length (or height) substantially into half its original length. On the other hand, if the user does not apply forces to the press button 76, the fixing member 72 will be pushed to turn to its original position by the tension of the spring 73, and then the upper tube 42 of the chair 4 is turned to latch the fixing member 72 into the positioning slot 741 of the lower joint 74 in order to unfold and position the chair 4 as shown in FIGS. 16, 24 and 25, and achieve the same effect of the aforementioned preferred embodiment. The chair may be folded such that the overall length of the chair is reduced to between 50% and 60% of the original length.

## Claims

1. A baby stroller, comprising:
an independent stroller frame (2) including a rotatable base (3); and
a detachable chair (4), wherein when the baby stroller is unfolded, the base abuts and positions the stroller frame automatically, and when the baby stroller is folded, the chair is rotated together with the base, such that the chair can be folded and positioned together with the stroller frame directly;
the chair includes a fabric seat (41), upper and lower tubes (42, 43) mounted onto the seat, and a chair folding joint (6) installed between the seat and the upper and lower tubes, wherein the chair folding joint comprises:
an upper joint (61, 71), fixed to the bottom of the upper tube of the seat, and having a notch (611, 711) formed on an external side of the upper joint;
a fixing member (62, 72), installed into the notch of the upper joint through a spring (69, 73);
a lower joint (64, 74), fixed at an upper end of the lower tube of the seat, and having a positioning slot (641, 741) formed on an internal side of the lower joint and corresponding to the fixing member;
a press button (66, 76), installed on an external side at the upper tube of the seat, and having a slide member (67, 77) coupled to the bottom of the press button; and
a link element (68, 78), installed in the upper tube of the seat, and being configured to link an actuation of the press button with folding the chair.

2. The baby stroller of claim 1, wherein the base (3) has a positioning element (32) installed on external side at an upper end of the base.

3. The baby stroller of claim 1 or 2, wherein the stroller folding joint (24) comprises:
two joint covers (51), secured by a fixing element (31);
an upper link plate (52), coupled to an upper tube (21) of the stroller frame (2), and having a bump (53); and
a lower link plate (55), coupled to a lower tube (22) of the stroller frame, and having a stop body (56).

4. The baby stroller of claim 2, wherein the base (3) of the stroller frame (2) further comprises a latch (301, 302), and wherein
the positioning element (32) is configured to prevent the chair (4) from rotating relative to the stroller frame when the stroller frame is in an unfolded use position and the chair is configured to rotate when the stroller frame is not in the unfolded use position.

5. The baby stroller of any one of claims 2 to 4, wherein the positioning element (32) is installed on an external side at an upper end of the base (2).

6. The baby stroller of any one of claims 4 or 5, wherein the rotatable base (2) is rotatably connected to the stroller folding joint (24) by the fixing element (31).

7. The baby stroller of claim 6, wherein the fixing element (31) is a bolt.

8. The baby stroller of any one of the preceding claims, wherein the lower tube (43) comprises a first tube (43a) and a second tube (43b), wherein the first tube and the second tube are rotatably connected by a foot rest joint (403a, 403b) configured to rotate a lower tube relative to the second tube.

## Patentansprüche

1. Kinderwagen, der Folgendes umfasst:
einen unabhängigen Kinderwagenrahmen (2), der eine drehbare Basis (3) beinhaltet; und
einen lösbaren Stuhl (4), wobei, wenn der Kinderwagen auseinandergeklappt wird, sich die Basis automatisch an den Kinderwagenrahmen anlegt und denselben positioniert, und wenn der Kinderwagen zusammengeklappt wird, der Stuhl zusammen mit der Basis gedreht wird, derart, dass der Stuhl zusammen mit dem Kinderwagenrahmen direkt zusammengeklappt und positioniert werden kann;
der Stuhl beinhaltet einen Stoffsitz (41), ein oberes und ein unteres Rohr (42, 43), die am Sitz montiert sind, und ein Stuhlklappgelenk (6), das zwischen dem Sitz und dem oberen und dem unteren Rohr installiert ist, wobei das Stuhlklappgelenk Folgendes umfasst:
ein oberes Gelenk (61, 71), das unten am oberen Rohr des Sitzes befestigt ist und eine Kerbe (611, 711) aufweist, die auf einer Außenseite des oberen Gelenks gebildet ist;
eine Befestigungskomponente (62, 72), die über eine Feder (69, 73) in der Kerbe des oberen Gelenks installiert ist;
ein unteres Gelenk (64, 74), das am oberen Ende des unteren Rohres des Sitzes befestigt ist und einen Positionierungsschlitz (641, 741) aufweist, der auf einer Innenseite des unteren Gelenks gebildet ist und der Befestigungskomponente entspricht;
einen Druckknopf (66, 76), der auf einer Außenseite des oberen Rohres des Sitzes installiert ist und eine Gleitkomponente (67, 77) aufweist, die unten am Druckknopf angebracht ist; und
ein Kopplungselement (68, 78), das im oberen Rohr des Sitzes installiert und dazu ausgelegt ist, eine Betätigung des Druckknopfes an das Zusammenklappen des Stuhls zu koppeln.

2. Kinderwagen nach Anspruch 1, wobei die Basis (3) ein Positionierungselement (32) aufweist, das auf einer Außenseite an einem oberen Ende der Basis installiert ist.

3. Kinderwagen nach Anspruch 1 oder 2, wobei das Stuhlklappgelenk (24) Folgendes umfasst:
zwei Gelenkabdeckungen (51), die mit einem Befestigungselement (31) gesichert sind;
eine obere Koppelplatte (52), die an ein oberes Rohr (21) des Kinderwagenrahmens (2) gekoppelt ist und eine Erhöhung (53) aufweist; und
eine untere Koppelplatte (55), die an ein unteres Rohr (22) des Kinderwagenrahmens gekoppelt ist und einen Anschlagkörper (56) aufweist.

4. Kinderwagen nach Anspruch 2, wobei die Basis (3) des Kinderwagenrahmens (2) ferner einen Riegel (301, 302) umfasst, und wobei
das Positionierungselement (32) dazu ausgelegt ist zu verhindern, dass sich der Stuhl (4) relativ zum Kinderwagenrahmen dreht, wenn sich der Kinderwagenrahmen in einer auseinandergeklappten Gebrauchsposition befindet, und der Stuhl dazu ausgelegt ist, sich zu drehen, wenn sich der Kinderwagenrahmen nicht in der auseinandergeklappten Gebrauchsposition befindet.

5. Kinderwagen nach einem der Ansprüche 2 bis 4, wobei das Positionierungselement (32) auf einer Außenseite eines oberen Endes der Basis (2) installiert ist.

6. Kinderwagen nach einem der Ansprüche 4 oder 5, wobei die drehbare Basis (2) durch das Befestigungselement (31) drehbar mit dem Stuhlklappgelenk (24) verbunden ist.

7. Kinderwagen nach Anspruch 6, wobei das Befestigungselement (31) ein Bolzen ist.

8. Kinderwagen nach einem der vorhergehenden Ansprüche, wobei das untere Rohr (43) ein erstes Rohr (43a) und ein zweites Rohr (43b) umfasst, wobei das erste Rohr und das zweite Rohr über ein Fußstützengelenk (403a, 403b), das dazu ausgelegt ist, ein unteres Rohr relativ zum zweiten Rohr zu drehen, drehbar verbunden sind.

## Revendications

1. Poussette de bébé comprenant :
un cadre de poussette indépendant (2) comprenant une base rotative (3) ; et
un fauteuil détachable (4), dans laquelle lorsque la poussette de bébé est dépliée, la base vient en butée contre et positionne le cadre de poussette automatiquement, et lorsque la poussette de bébé est pliée, le fauteuil tourne conjointement avec la base, de sorte que le fauteuil peut être plié et positionné conjointement avec le cadre de poussette directement ;
le fauteuil comprend un siège en tissu (41), des tubes supérieur et inférieur (42, 43) montés sur le siège, et une articulation de pliage de fauteuil (6) installée entre le siège et les tubes supérieur et inférieur, dans laquelle l'articulation de pliage de fauteuil comprend :
une articulation supérieure (61, 71) fixée sur le fond du tube supérieur du siège, et ayant une encoche (611, 711) formée sur un côté externe de l'articulation supérieure ;
un élément de fixation (62, 72) installé dans l'encoche de l'articulation supérieure par le biais d'un ressort (69, 73) ;
une articulation inférieure (64, 74) fixée au niveau d'une extrémité supérieure du tube inférieur du siège, et ayant une fente de positionnement (641, 741) formée sur un côté interne de l'articulation inférieure et correspondant à l'élément de fixation ;
un bouton à pression (66, 76) installé sur un côté externe au niveau du tube supérieur du siège, et ayant un élément coulissant (67, 77) couplé au fond du bouton à pression ; et
un élément de liaison (68, 78), qui est installé dans le tube supérieur du siège et est configuré pour relier un actionnement du bouton à pression avec le pliage du fauteuil.

2. Poussette de bébé selon la revendication 1, dans laquelle la base (3) a un élément de positionnement (32) installé sur le côté externe au niveau d'une extrémité supérieure de la base.

3. Poussette de bébé selon la revendication 1 ou 2, dans laquelle l'articulation de pliage de poussette (24) comprend :
deux couvercles d'articulation (51) fixés par un élément de fixation (31) ;
une plaque de liaison supérieure (52) couplée à un tube supérieur (21) du cadre de poussette (2) et ayant une bosse (53) ; et
une plaque de liaison inférieure (55) couplée à un tube inférieur (22) du cadre de poussette, et ayant un corps de butée (56).

4. Poussette de bébé selon la revendication 2, dans laquelle la base (3) du cadre de poussette (2) comprend en outre un verrou (301, 302), et dans laquelle :
l'élément de positionnement (32) est configuré pour empêcher le fauteuil (4) de tourner par rapport au cadre de poussette lorsque le cadre de poussette est dans une position d'utilisation dépliée et le fauteuil est configuré pour tourner lorsque le cadre de poussette n'est pas dans la position d'utilisation dépliée.

5. Poussette de bébé selon l'une quelconque des revendications 2 à 4, dans laquelle l'élément de positionnement (32) est installé sur un côté externe au niveau d'une extrémité supérieure de la base (2).

6. Poussette de bébé selon l'une quelconque des revendications 4 ou 5, dans laquelle la base rotative (2) est raccordée, en rotation, à l'articulation de pliage de poussette (24) par l'élément de fixation (31).

7. Poussette de bébé selon la revendication 6, dans laquelle l'élément de fixation (31) est un boulon.

8. Poussette de bébé selon l'une quelconque des revendications précédentes, dans laquelle le tube inférieur (43) comprend un premier tube (43a) et un second tube (43b), dans laquelle le premier tube et le second tube sont raccordés, en rotation, par une articulation de repose-pied (403a, 403b) configurée pour faire tourner un tube inférieur par rapport au second tube.
